(19) Europäisches Patentamt
European Patent Office
Office européen des brevets

(11) **EP 2 568 636 B1**

(12) **EUROPEAN PATENT SPECIFICATION**

(45) Date of publication and mention
of the grant of the patent:
**13.11.2013 Bulletin 2013/46**

(51) Int Cl.:
***H04L 27/26*** *(2006.01)*

(21) Application number: **11290398.4**

(22) Date of filing: **06.09.2011**

(54) **Optical PDM-QAM burst mode system with OFDM synchronisation symbols**

Optisches PDM-QAM-Burst-Mode-System mit OFDM-Synchronisationssymbolen

Système optique à mode rafale PDM-QAM avec symboles de synchronisation OFDM

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.03.2013 Bulletin 2013/11**

(73) Proprietor: **Alcatel Lucent
75007 Paris (FR)**

(72) Inventors:
• **Dischler, Roman
70469 Stuttgart (DE)**

• **Buchali, Fred
71336 Stuttgart (DE)**

(74) Representative: **Wetzel, Emmanuelle
Alcatel Lucent
Intellectual Property & Standards
70430 Stuttgart (DE)**

(56) References cited:
**US-A1- 2010 086 303    US-A1- 2011 096 855**

**Description**

The present document relates to optical transmission. In particular, the present document relates to the synchronisation and adaption of a coherent optical receiver for polarisation division multiplexed (PDM) transmission systems.

In optical transmission systems using coherent optical receivers, digital signal processors which may comprise equalization filters and/or de-polarization filters may be used to compensate for linear and non-linear distortions incurred by the optical signal over the transmission medium. The distortions which are caused by the transmission medium may typically be described by a transfer function of the transmission medium. Blind adaption of the optical receiver may be used to determine the coefficients of the equalization and/or de-polarization filters. The blind adaption may make use of a constant- or multimodulus algorithm. However, the use of blind adaption typically requires long training sequences (e.g. several 1000 symbols) in order to converge to appropriate coefficients of the equalization filters and/or de-polarization filters. Furthermore, the receiver typically requires a continuous data stream in order to stay synchronized with modifications to the transfer function of the transmission medium. In addition, due to the long trainings phases of the receiver when using blind adaption, the switching of a receiver between different transmitters is usually not efficient.

The present document addresses the above mentioned shortcomings with respect to the synchronisation and adaption of a (coherent) optical receiver.

According to an aspect a transmitter or a module for a transmitter of an optical polarization division multiplexed (PDM) signal is described. The module for the transmitter may e.g. be a transmitter sub-assembly or sub-system. The PDM signal usually comprises a first signal component in a first optical polarization plane and a second signal component in a second optical polarization plane. The first and second optical polarization planes may be orthogonal with respect to each other.

The transmitter or the module for a transmitter typically comprises a symbol generation unit (also referred to as header generation unit) which is configured to generate a first OFDM symbol and a second OFDM symbol. Furthermore, the transmitter or the module for a transmitter usually comprises a symbol insertion unit (also referred to as header insertion unit) adapted to adjoin the first OFDM symbol to first payload data for transmission in the first signal component, and adapted to adjoin the second OFDM symbol to second payload data for transmission in the second signal component. In other words, the transmitter or the module for a transmitter is adapted to add a first and second OFDM symbol as headers to first and second payload data, respectively. By generating first and second OFDM symbols which comprise mutually exclusive sets of OFDM subcarriers, the first and second OFDM symbols can be used for quasi instantaneous polarization de-multiplexing of the first and second signal components at a corresponding receiver. Furthermore, the use of OFDM header symbols allows for quasi instantaneous timing synchronization, frequency offset compensation and/or channel equalization, as will be outlined in the following.

As indicated above, the symbol generation unit is typically configured to generate a first OFDM symbol and a second OFDM symbol. The first and/or second OFDM symbols may comprise $N$ samples, and the first and/or second OFDM symbols may comprise $N$ OFDM subcarriers. In order to enable fast polarization de-multiplexing at the corresponding receiver, the first and second OFDM symbols usually comprise mutually exclusive sets of OFDM subcarriers. In other words, the first and second OFDM symbols may comprise mutually exclusive frequency components, i.e. the first OFDM symbol may comprise frequency components which are not comprised within the second OFDM symbol and vice versa. The mutually exclusive sets of OFDM subcarriers comprise a first set for the first OFDM symbol and a second set for the second OFDM symbol. As such, the first set of OFDM subcarriers may comprise subcarriers which are not comprised within the second set of OFDM subcarriers and vice versa. By way of example, a first half of the $N$ OFDM subcarriers is comprised within the first set and the other half of the $N$ OFDM subcarriers is comprised within the second set. In particular, the first and second set of OFDM subcarriers may be interleaved, such that - in an example - every second OFDM subcarrier is assigned to the first set and the remaining OFDM subcarriers are assigned to the second set.

As will be outlined in the following, it may be advantageous to generate OFDM symbols which have a pre-determined structure in the time-domain, wherein the pre-determined structure enables the corresponding receiver to perform timing synchronization, frequency offset compensation and/or channel equalization. In order to generate an appropriate pre-determined structure, it may be advantageous to set the even or odd OFDM subcarriers to zero. In this case, the first and second set of OFDM subcarriers are selected from the OFDM subcarriers which are not set to zero. In a particular example, the odd OFDM subcarriers are set to zero and the first set of OFDM subcarriers comprises the OFDM subcarriers $2+4*k$ and the second set of OFDM subcarriers comprises the OFDM subcarriers $4*k$, with $k=0,...,N/4-1$.

The symbol generation unit may be configured to select amplitudes of the OFDM subcarriers comprised within the first and/or second OFDM symbols. By way of example, the amplitude of the odd or even OFDM subcarriers may be set to zero. In this case, only half of the available OFDM subcarriers have non-zero amplitudes. Alternatively or in addition, the phase of the non-zero OFDM subcarriers (i.e. first and/or second set of OFDM subcarriers) may be MPSK (mary phase-shift keying) modulated (e.g. 2PSK with a phase of 0 or $\pi$) with data selected from a pseudo-random sequence. As a result of appropriately selecting the amplitudes and/or phase of the OFDM subcarriers, the first and/or second OFDM symbols can be provided with a pre-determined structure in the time-domain. As outlined above, the pre-determined structure in the time-domain enables a corresponding receiver to perform quasi-instantaneous timing synchronization, frequency offset compensation and/or channel equalization.

Furthermore, by appropriately selecting and/or modulating the amplitudes and/or phase of the first and/or second OFDM symbols, the first and/or second OFDM symbols can be used to carry signaling information (e.g. information regarding the subsequent payload data such as addressing information and/or modulation format information).

As outlined above, the symbol insertion unit is typically configured to adjoin or to add the first OFDM symbol to first payload data for transmission in the first signal component. Furthermore, the symbol insertion unit is typically configured to adjoin or add the second OFDM symbol to second payload data for transmission in the second signal component. In other words, the symbol insertion unit is configured to add the first and/or second OFDM symbol as a header to first and/or second payload data, respectively. The first and/or second payload data may be OFDM data and/or single carrier data. As such, the first and second OFDM symbol can be combined with a large variety of payload data. By way of example, the first and/or second payload data may be a continuous data stream or a data packet. In view of the quasi instantaneous convergence of the corresponding receiver to the received data, data packets comprising OFDM header symbols can be used to implement packet switched optical networks.

In addition, the first and/or second payload data may comprise a pilot symbol and/or a pilot subcarrier for enabling equalization at a corresponding receiver. In particular, a pilot symbol and/or a pilot subcarrier within the payload data can be used to enable the continuous adjustment of the receiver parameters.

The symbol insertion unit may be configured to periodically adjoin or add a first and/or a second OFDM symbol to the first and/or second payload data, respectively. If the payload data is arranged in data packets, the symbol insertion unit may be configured to add a first and/or second OFDM symbol as a header to some (e.g. every $M^{th}$ packet, M=1,...., 10) or all data packets.

As indicated above, the first and/or second OFDM symbols may be provided with a pre-determined structure in the time-domain, in order to enable quasi instantaneous timing synchronization, frequency offset compensation and/or channel equalization. In this case, the symbol generation unit is configured to generate the first OFDM symbol and the second OFDM symbol having a pre-determined structure in the time domain. Typically, this is achieved by appropriately modulating the OFDM subcarriers or by appropriately selecting the amplitudes and/or phase of the OFDM subcarriers. The pre-determined structure may comprise a symmetry in time domain of one or more subgroups of the $N$ samples of the OFDM symbol, a periodic repetition in time domain of one or more identical subgroups of the $N$ samples of the OFDM symbol, and/or complex conjugation of one or more subgroups of the $N$ samples of the OFDM symbol. By way of example, the pre-determined structure of the samples of the first and/or second OFDM symbol in the time domain is [A, A], wherein A is a subsequence of $N/2$ samples of the first and/or second OFDM symbol. Alternatively, the pre-determined structure in the time domain is [C, D, C*, D*], wherein C and D are subsequences of $N/4$ samples of the first and/or second OFDM symbol, and wherein C* and D* are complex conjugates of C and D, respectively. As outlined above, the selection of an appropriate structure of the first and/or second OFDM symbol in the time domain can be used at a corresponding receiver for timing synchronization, frequency offset determination and compensation and/or channel equalization tasks.

According to a further aspect, a receiver or a module for a receiver of an optical polarization division multiplexed (PDM) signal is described. The receiver or the module for the receiver may e.g. be a receiver sub-assembly or sub-system. As outlined above, the PDM signal may comprise a first signal component in a first optical polarization plane and a second signal component in a second optical polarization plane. The first and second optical polarization planes may be orthogonal with respect to each other. The first signal component may comprise a first OFDM symbol preceding first payload data. The second signal component may comprise a second OFDM symbol preceding second payload data.

The receiver or the module for a receiver may comprise a channel estimation unit configured to determine coefficients of a polarization de-multiplexer. The polarization de-multiplexer may be configured to isolate the first and second signal components from the PDM signal. In other words, the polarization de-multiplexer may be configured to rotate the PDM signal, in order to identify the first and second polarization plane and to thereby isolate the first and second signal components of the PDM signal. For this purpose, the polarization de-multiplexer may comprise a 2x2 multiple-in-multiple-out (MIMO) filter structure with four FIR filters, wherein each FIR filter may have a predetermined number of coefficients (e.g. 1, 2, 3, 4, 5, 6, 7 coefficients). In other words, the polarization de-multiplexer may apply a

matrix $H = \begin{pmatrix} h_{11} & h_{12} \\ h_{21} & h_{22} \end{pmatrix}$ comprising the four coefficients of a 2x2 MIMO-filter. In more general terms, the four coef-

ficients $h_{ij}$, $i, j$ = 1,2 may be four FIR filters with a pre-determined number of coefficients. Typically, the four FIR filters enable a frequency dependent weighting of the received PDM signal, as well as an adaption in time of the received PDM signal.

The channel estimation unit may be configured to determine the coefficients based on the fact or using the fact that, at a corresponding transmitter, the first and second OFDM symbols comprised mutually exclusive sets of OFDM subcarriers. In other words, the channel estimation unit may exploit the fact that the first and second OFDM symbols have been generated and inserted by a transmitter or a module for a transmitter of a PDM signal as outlined above. In particular, the channel estimation unit may be configured to determine the four filter coefficients as the coefficients of the two by two rotation matrix which transform the first and second OFDM symbols at the receiver into the first and second OFDM symbols at the transmitter.

As outlined above, the first and/or second OFDM symbols may have a pre-determined structure in the time-domain. The receiver or the module for the receiver may comprise subunits which make use of the pre-determined structure for time synchronization and/or frequency offset compensation purposes. In particular, the receiver may comprise a symbol detection unit configured to determine a time offset using the pre-determined structure of the first and/or second OFDM symbols. In addition, the receiver may comprise a timing synchronization unit configured to time-synchronize the reception of the first and/or second payload data using the timing offset. Alternatively or in addition, the receiver may comprise a frequency offset determination unit configured to determine a frequency offset using the pre-determined structure of the first and/or second OFDM symbols. Furthermore, the receiver may comprise a frequency offset compensation unit configured to compensate a frequency offset of a local oscillator (LO) carrier used for the reception of the first and/or second payload data with a coherent optical receiver.

According to a further aspect, an optical polarization division multiplexed (PDM) signal comprising a first signal component in a first optical polarization plane and a second signal component in a second optical polarization plane is described. The first and second optical polarization planes may be orthogonal with respect to each other. The first signal component may comprise a first OFDM symbol followed by first payload data. The second signal component may comprise a second OFDM symbol followed by second payload data. The first and second OFDM symbols may comprise mutually exclusive sets of OFDM subcarriers. In other words, the first OFDM symbol may comprise OFDM subcarriers which are not comprised within the second OFDM symbol and vice versa.

According to another aspect, a method for enabling polarization de-multiplexing of an optical polarization division multiplexed (PDM) signal is described. The method is typically executed at a transmitter of an optical transmission network. The method may comprise generating a first OFDM symbol and a second OFDM symbol. The first and second OFDM symbols may comprise mutually exclusive sets of OFDM subcarriers. Furthermore, the method may comprise adding the first OFDM symbol to first payload data for transmission in a first signal component of the PDM signal, and/or adding the second OFDM symbol to second payload data for transmission in a second signal component of the PDM signal. The first and second signal components may be transmitted on optical polarization planes which are orthogonal with respect to each other.

According to another aspect, a method for performing polarization de-multiplexing of an optical polarization division multiplexed (PDM) signal is described. The method is typically executed at an optical receiver of an optical transmission network. The PDM signal may comprise a first signal component in a first optical polarization plane and a second signal component in a second optical polarization plane. The first and second optical polarization planes may be orthogonal with respect to each other. The first signal component may comprise a first OFDM symbol as a header to first payload data. The second signal component may comprise a second OFDM symbol as a header to second payload data. The method may comprise determining coefficients of a polarization de-multiplexer for isolating the first and second signal components from the PDM signal. The coefficients may be determined using the fact that, at a corresponding transmitter, the first and second OFDM symbols comprised mutually exclusive sets of OFDM subcarriers.

According to a further aspect, a software program is described. The software program may be stored on a computer-readable medium (which may be tangible or otherwise non-transitory) as instructions that are adapted for execution on a processor and for performing the aspects and features outlined in the present document when carried out on a computing device.

According to another aspect, a storage medium comprising a software program is described. The storage medium may be memory (e.g. RAM, ROM, etc.), optical media, magnetic media and the like. The software program may be adapted for execution on a processor and for performing the aspects and features outlined in the present document when carried out on a computing device.

According to a further aspect, a computer program product is described. The computer program product may comprise executable instructions for performing the aspects and features outlined in the present document when executed on a computing device.

US2011/0096855 A discloses a transmitter and a receiver for an optical polarization division multiplexed, PDM, signal. The PDM signal comprises a training sequence having a first signal component in a first optical polarization plane and a second signal component in a second optical polarization plane. The first signal component comprises a first OFDM symbol adjoined to first payload data, the second signal component comprises a second OFDM symbol adjoined to second payload data. The first and second OFDM symbols comprise mutually exclusive sets of OFDM subcarriers. Both symbols have a pre-determined structure in the time domain and the same duration of N samples. The transmitter comprises a symbol generation unit for the training signal. The receiver comprises a channel estimation unit for evaluating the training signal.

The present invention is defined in the independent claims. Particular embodiments are set out in the dependent claims.

It should be noted that the methods and systems or modules including its preferred embodiments as outlined in the present document may be used stand-alone or in combination with the other methods and systems or modules disclosed in this document. Furthermore, all aspects of the methods and systems or modules outlined in the present document may be arbitrarily combined. In particular, the features of the claims may be combined with one another in an arbitrary manner.

The invention is explained below in an exemplary manner with reference to the accompanying drawings, wherein

Fig. 1 illustrates an example time division multiplexing (TDM) system with multiple transmitters and fast adapting receiver;

Fig. 2 shows an example for the insertion of OFDM header symbols into data streams;

Fig. 3 shows an example OFDM header sequence;

Fig. 4 illustrates an example block diagram of the signal processing at the receiver on the header path and on the data path;

Fig. 5 shows an example TDM/WDM (wavelength division multiplexing) system on a fiber ring;

Fig. 6 shows an example TDM/WDM system in fully meshed network topology;

Fig. 7 illustrates an example block diagram of the usage of header detection to separate a data stream into blocks for further processing, e.g. for forward error correction (FEC), in memory; and

Fig. 8 illustrates an example block diagram of a system for an optical transmitter.

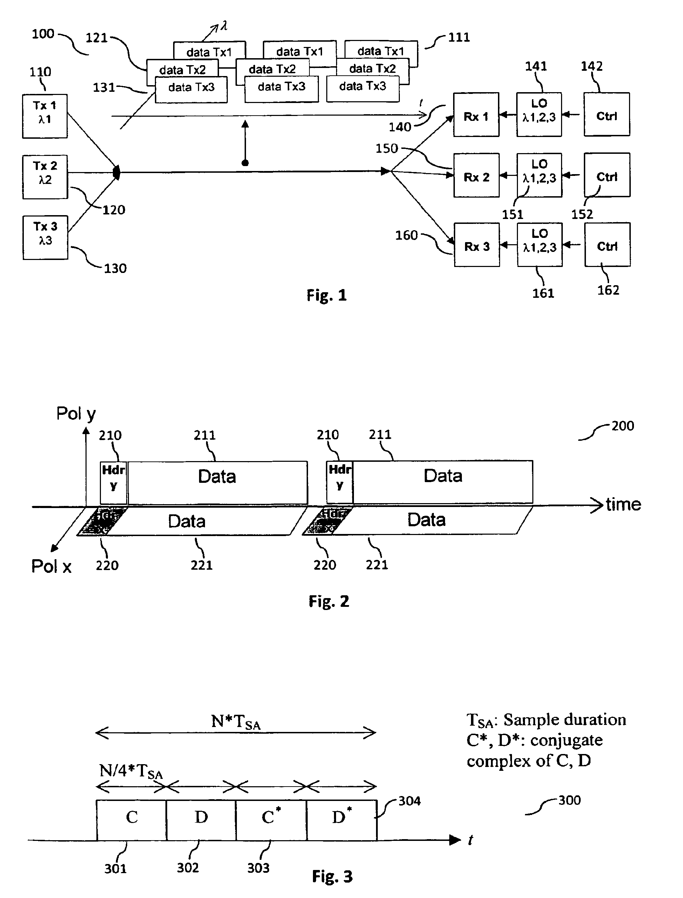

In optical telecommunication, it may be desirable to provide a highly meshed optical network 100 with M transmitters 110, 120, 130 and N receivers 140, 150, 160 as illustrated in Fig. 1. Each transmitter 110, 120, 130 may be transparently connected to each receiver 140, 150, 160. Each receiver 140, 150, 160 may receive data 111, 121, 131 from several transmitters 110, 120, 130 in parallel, wherein each transmitter 110, 120, 130 may send its data on a different wavelength $\lambda_1, \lambda_2, \lambda_3$. Collisions of data (i.e. the parallel transmission of data at the same wavelength) may be avoided by network management or suitable media access control. At a receiver 140, 150, 160, the selection of data sent from a particular transmitter 110, 120, 130 may be performed by a coherent receiver with an optical local oscillator 141, 151, 161 in combination with an appropriate signal processing 142, 152, 162. As such, a receiver 140, 150, 160 may tune its optical local oscillator 141, 151, 161 to the wavelength $\lambda_1, \lambda_2, \lambda_3$ of a selected transmitter 110, 120, 130 and thereby receive the data 111, 121, 131 sent by the selected transmitter 110, 120, 130. The targeted network 100 may support the transport of data packets 111, 121, 131. The targeted network 100 should have a high spectral efficiency using coherent reception. Due to the switching of the receivers 140, 150, 160 between transmitters 110, 120, 130 on a per packet basis (as illustrated by the gray shaded data packets 111, 121, 131 of Fig. 1), receiver algorithms which rely on convergence schemes, such as the constant modulus algorithm (CMA), are not appropriate, as they typically require long convergence times.

In order to overcome the above mentioned shortcomings of conventional coherent receivers and in order to allow for switched, fully meshed optical networks, it is proposed to make use of an optimized training symbol. The optimized training symbol should allow for timing synchronization, frequency- and phase offset estimation between the transmitter laser and the receiver laser (local oscillator), channel estimation and correction, and polarization de-multiplexing for following data symbols. The above mentioned tasks should be achieved with high precision. The optimized training symbol may be applied to payload data comprising OFDM data or single carrier data. As a result, a sequence of packets 200 may be obtained as illustrated in Fig. 2. Each packet comprises two polarization components x and y., wherein the polarization components comprise payload data 221 and 211 in the two orthogonal polarizations x and y, respectively. Furthermore, the polarization components comprise headers 210, 220 for the x and y polarization, respectively. Theses headers 210, 220 may comprise the training symbols for determining the appropriate parameters for timing synchronization, frequency- and phase offset estimation between the transmitter laser and the receiver laser, channel estimation and correction, and/or polarization de-multiplexing. The different packets may comprise payload data in different formats (e.g. different constellations, OFDM vs. single carrier data, different bitrates) on a packet by packet basis. As such, the use of OFDM header symbols 210, 220 in combination with payload data 211, 221 enables the quasi instantaneous synchronization of a receiver 140, 150, 160 with an arbitrary transmitter 110, 120, 130, thereby enabling the implementation of highly meshed optical networks 100.

It should be noted that the optimized training symbol may also be combined with a continuous stream of data, i.e. the optimized training symbol may precede a continuous stream of data. As such, the optimized training symbol may ensure a fast adaption of the optical receiver to the transfer function of the optical transmission medium. Subsequent, continuous adaption algorithms (e.g. the CMA algorithm) may be used on the continuous stream of data in order to keep track of modifications of the transfer function.

The optimized training symbol may be an OFDM based training symbol. An OFDM symbol at the transmitter 110, 120, 130 may be represented in the time domain as

$$x[n] = \sum_{k=0}^{N-1} c_k e^{j(2\pi/N)kn} \,,$$

where $N$ is the number of OFDM sub-carriers and the $c_k$ are the complex information symbols. The time domain OFDM signal is transmitted over the optical transmission channel having a channel impulse response $h[m]$, thereby yielding the OFDM signal after having passed through the transmission channel

$$y[n] = \sum_{m=0}^{L-1} h[m]x[n-m] \,,$$

where $L$ denotes the memory of the channel impulse response.

At the receiver 140, 150, 160, a timing offset may be modeled as a delay in the received signal and a frequency offset may be modeled as a phase distortion of the received signal in the time domain. Furthermore, the received signal may be submitted to additive white Gaussian noise (AWGN), thereby yielding the received signal

$$r[n] = y[n - n_e]e^{j(2\pi\theta_e n/N + \phi)} + w[n] \,,$$

where $n_e$ is the (possibly integer-valued) unknown arrival time of the OFDM symbol, $\theta_e$ is the frequency offset, $\phi$ is the initial phase and $w[n]$ is the AWGN.

It may be shown that when using a symmetry and/or periodicity within the time-domain OFDM training symbol, this symmetry and/or periodicity may be used at the receiver to determine the timing offset $n_e$ and the frequency offset $\theta_e$. For this purpose, a metric function may be applied to the received signal $r[n]$. A maximum or minimum of the metric function may provide an indication of the to-be-estimated parameters. By way of example, an OFDM symbol may comprise two identical sub-sequences A of $N/2$ samples, i.e. the time-domain OFDM symbol of $N$ samples may be written as a sequence [A,A] of the two identical sub-sequences A. This means that the time-domain OFDM symbol comprises two identical halves. A metric

$$M(d) = \frac{\left|P(d)\right|^2}{\left(R(d)\right)^2} \,,$$

with

$$P(d) = \sum_{k=0}^{N/2-1} r*(d+k) \cdot r(d+k+N/2) \,,$$

and

$$R(d) = \sum_{k=0}^{N/2-1} \left|r(d+k+N/2)\right|^2 \,,$$

may be used to identify the parameter $d$ which maximizes the metric $M(d)$ and thereby provides an estimate of the timing offset $n_e$. In a similar manner, a metric for estimating the frequency offset $\theta_e$ may be determined. As indicated by the above mentioned formulas, as a result of correlation in the time domain within a sliding window, the exact position of the OFDM symbol inside the received stream of samples can be calculated, independently of a possible frequency shift of the received signal.

More complex pre-determined structures of the time-domain OFDM training symbol may be used to improve the quality of the estimates of the timing offset and the frequency offset. By way of example, the time-domain OFDM training symbol of $N$ samples may comprise four subsequences [C, D, C*, D*], wherein C* and D* are the conjugate complex of C and D, and wherein C and D have a length of $N/4$ samples. The sub-sequences C and D may be symmetric with respect to each other. This example time-domain OFDM training symbol 300 is illustrated in Fig. 3, wherein the sub-sequences C (reference numeral 301), D (reference numeral 302), C* (reference numeral 303) and D* (reference numeral 304) are shown.

The use of OFDM signals having a pre-determined structure in the time-domain has been described in the context of OFDM radio transmission in Park e.a., "A Novel Timing Estimation Method for OFDM Systems", IEEE Comm. Letters, Vol. 7, pp. 239-241, May 2003; and Schmidl, Cox, "Robust frequency and timing synchronization for OFDM," IEEE Trans. Commun., vol. 45, pp. 1613-1621, Dec. 1997. These documents are incorporated by reference.

As such, a pre-determined structure (e.g. a symmetry and/or a periodicity) within the time-domain OFDM training symbol may be used at the receiver to perform timing synchronization, as well as frequency- and phase offset estimation between the transmitter laser and the receiver laser. An OFDM training symbol having a pre-determined structure within the time domain may be created by appropriately selecting the information symbols $c_k$ of the $N$ OFDM subcarriers. By way of example, pseudo random sequences (PRBS) may be transmitted on the even OFDM subcarrier frequencies and zeros may be transmitted on the odd OFDM subcarrier frequencies to provide the OFDM training symbol [A, A] comprising two equal halves in the time-domain. Alternatively, the OFDM training symbol 300 of Fig. 3 may be constructed by calculating an OFDM symbol, in which every second subcarrier is MPSK modulated (while setting to zero the other half of OFDM subcarriers).

The OFDM training symbols may be extended for polarization multiplexing in optical transmission systems. It is proposed that for each polarization, a different, exclusive set of OFDM subcarriers is used during the construction of the OFDM training symbol. This allows the simultaneous transmission of two symbols 210, 220, one on each polarization plane, as shown in Fig. 2. By doing this, the time domain properties of each of the superimposed OFDM symbols 210, 220 are maintained. This means that the pre-determined structure of the time-domain OFDM training symbol is maintained, such that the OFDM training symbol may also be used for timing offset and frequency offset compensation. In yet other words, the construction of the two OFDM training symbols using different exclusive sets of OFDM subcarriers is compatible with the design of OFDM training symbols having a pre-determined structure in the time-domain, such that quasi-instantaneous timing synchronization, frequency offset compensation, channel equalization and polarization de-multiplexing can be implemented in parallel using the OFDM training symbols described in the present document.

As outlined above, the OFDM training symbols having a pre-determined structure within the time domain may be constructed by setting the odd OFDM subcarriers to zero, i.e. by only considering the even OFDM subcarriers. From the even OFDM subcarriers a first sub-set of OFDM subcarriers may be assigned to the OFDM training symbol for the first polarization and a second sub-set of OFDM subcarriers may be assigned to the OFDM training symbol for the second polarization (which is typically orthogonal to the first polarization). By way of example, the OFDM subcarriers $k$ = 2,6,10,..., i.e. the OFDM subcarriers $2+4*k$ with $k=0,...,N/4-1,$ may be used to generate the first OFDM training symbol 210 for the first polarization and the OFDM subcarriers $k$ = 0,4,8,12,..., i.e. the OFDM subcarriers $4*k$, with $k=0,...,N/4-1$, may be used to generate the second OFDM training symbol 220 for the second polarization.

At the receiver, the first and the second OFDM training symbols 210, 220 may be separated in the frequency domain, e.g. after FFT of the received signal. By comparison of the received symbols $r[n]$ with the transmitted symbols $x[n]$, a 2x2 MIMO (multiple input, multiple output) matrix for polarization de-multiplexing and further channel equalization can be estimated. In particular, the coefficients $H = \begin{pmatrix} h_{11} & h_{12} \\ h_{21} & h_{22} \end{pmatrix}$ of the polarization de-multiplexer may be determined.

By way of example, a first OFDM training symbol 210 may comprise the OFDM subcarriers $k=2, 6, 10, ....,$ i.e. the first OFDM symbol 210 at the transmitter may be written as

$$x_1[n] = \sum_{k=0}^{N/4-1} c_{4k+2} e^{j(2\pi/N)(4k+2)n} .$$

The second OFDM symbol 220 may comprise the OFDM subcarriers $k=0, 4, 8, ....,$ i.e. the second OFDM symbol 220 at the transmitter may be written as

$$x_2[n] = \sum_{k=0}^{N/4-1} c_{4k} e^{j(2\pi/N)(4k)n} \,.$$

The first and second OFDM training symbols at the receiver may be written as $r_1[n] = \sum_{k=0}^{N-1} d_{1,k} e^{j(2\pi/N)kn}$ and $r_2[n] = \sum_{k=0}^{N-1} d_{2,k} e^{j(2\pi/N)kn}$, respectively. The vectors $\begin{bmatrix} x_1[n] \\ x_2[n] \end{bmatrix}$ and $\begin{bmatrix} r_1[n] \\ r_2[n] \end{bmatrix}$ are linked by the rotation matrix $H = \begin{pmatrix} h_{11} & h_{12} \\ h_{21} & h_{22} \end{pmatrix}$ of the polarization de-multiplexer by

$$\begin{bmatrix} x_1[n] \\ x_2[n] \end{bmatrix} = \begin{pmatrix} h_{11} & h_{12} \\ h_{21} & h_{22} \end{pmatrix} \begin{bmatrix} r_1[n] \\ r_2[n] \end{bmatrix} \,.$$

This results in an array of equations in the frequency domain, i.e.

$$\begin{bmatrix} c_k \\ 0 \end{bmatrix} = \begin{pmatrix} h_{11} & h_{12} \\ h_{21} & h_{22} \end{pmatrix} \begin{bmatrix} d_{1,k} \\ d_{2,k} \end{bmatrix}, \text{ for } k=2,\ 6,\ 10,\ \dots.$$

$$\begin{bmatrix} 0 \\ c_k \end{bmatrix} = \begin{pmatrix} h_{11} & h_{12} \\ h_{21} & h_{22} \end{pmatrix} \begin{bmatrix} d_{1,k} \\ d_{2,k} \end{bmatrix}, \text{ for } k=0,\ 4,\ 8,\ \dots,$$

from which appropriate values for the matrix $H = \begin{pmatrix} h_{11} & h_{12} \\ h_{21} & h_{22} \end{pmatrix}$ can be determined. To achieve better accuracy for polarization de-multiplexing and channel equalization the implementation of the coefficients $h_{ij}$ as FIR-filter structures instead of a single complex number may be appropriate.

Consequently, suitably constructed OFDM symbols are inserted into the data stream, in order to allow for a fast synchronization of the optical receiver 140, 150, 160 with the incoming data stream. The data stream is typically an I/Q-modulated optical carrier on two orthogonal polarizations. As illustrated in Fig. 2, the OFDM training symbols 210, 220 are preceding every data transmission 211, 221. The OFDM training symbols 210, 220 may be repeated periodically for better tracking of channel parameters inside the receiver 140, 150, 160 by interpolating the matrix coefficients $h_{ij}$ between two training symbols. The usage of OFDM training symbols 210, 220, which have been generated using different, exclusive sets of subcarriers, allows for the transmission of a different symbol on each polarization at the same time (i.e. in parallel).

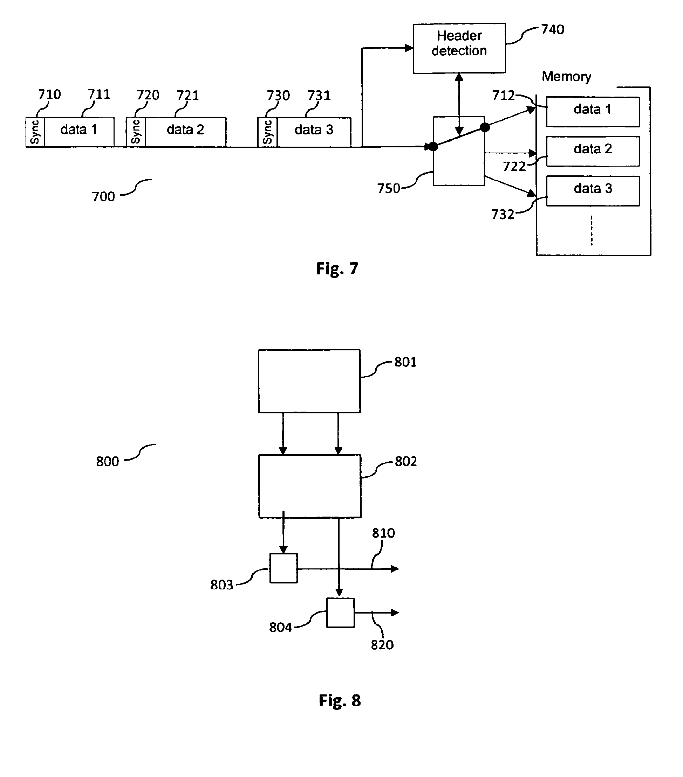

Fig. 8 illustrates an example block diagram of a system or module 800 which may be used within an optical transmitter. The first 210 and second 220 OFDM training symbols may be generated within the OFDM symbol generation unit 801. Using a symbol insertion unit 802, the first and second OFDM training symbols are then combined with first and second payload data, respectively. The first and second combined data is then modulated onto optical signals in the modulation units 803, 804, respectively. The optical signals have a first and a second polarization, wherein the first and second polarization planes are orthogonal with respect to each other. As such, a first signal component 810 and a second signal component 802 are obtained, wherein the first and second signal components have polarizations which are orthogonal with respect to one another. As a result, data packets as shown in Fig. 2 may be obtained.

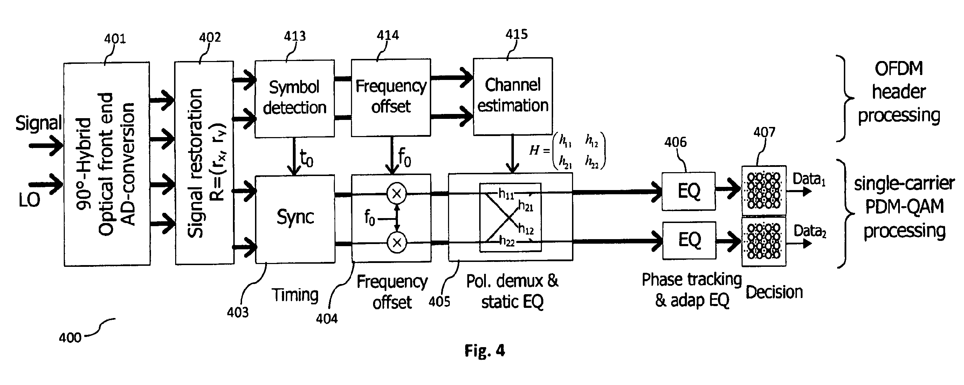

Fig. 4 illustrates an example block diagram of a coherent optical receiver 400. Using a 90°-Hybrid, and optical front end and analog to digital (AD) converters in unit 401, as well as a signal restoration unit 402, a pair of (complex-valued) digital signals, representing the polarization multiplexed optical signal, may be determined. This pair of digital signals is submitted to two different paths for signal processing. The first path is directed at the OFDM header processing, and the second path is directed at the processing of the payload data, e.g. the single carrier PDM-QAM signal. It should be noted that single carrier PDM-QAM is only an example, and that the OFDM header processing can be combined with any suitable data modulation and the respective processing of the payload data, e.g. PDM-MPSK (phase shift keying of order M) or OFDM.

Typically, the header processing starts upon the detection of the OFDM header symbols 210, 220. In order to detect the OFDM header symbols 210, 220, the receiver 400 may analyze the received data stream in order to identify an OFDM header symbol 210, 220 based on its pre-determined structure. Alternatively or in addition, the OFDM header symbols 210, 220 may be transmitted on a regular / periodic basis, such that the receiver 400 may expect the OFDM header symbols 210, 220 at regular intervals or subject to a trigger event.

If the OFDM header symbols 210, 220 are detected, the timing synchronization, frequency offset correction and polarization de-multiplexing coefficients for 2x2 MIMO are calculated within the symbol detection unit 413, the frequency offset determination unit 414 and the channel estimation unit 415, respectively. For this purpose, the receiver uses information derived from the subcarriers of the OFDM symbols.

Once, the header processing has determined the time offset to, the frequency offset $f_0$ and/or the de-multiplexing coefficients, the determined information is applied to the signal processing of the payload data, e.g. the PDM-QAM data symbols. This is performed in a timing synchronization unit 403, a frequency offset compensation unit 404 and a polarization de-multiplexing unit 405, respectively. Because all relevant information for correct processing in the receiver 400 is available after the header processing in units 413, 414, 415, the receiver 400 adapts quasi instantaneously to the data burst. In addition, the payload data processing may comprise an equalization unit 406 and a decision unit 407 to recover the data from the pair of digital signals.

It should be noted that the proposed method of header insertion can be combined with pilot symbols or pilot subcarriers inside the data block. This means that the payload data may comprise additional pilot symbols or pilot subcarriers for the tracking of fast changing channel parameters like laser phase noise, polarization etc., in-between two OFDM header symbols 210, 220. Alternatively or in addition, the random or periodic repetition of the OFDM header symbol inside a data block or at the end of a data block may be used to support the tracking of channel variations at the receiver side.

The subcarrier modulation within the OFDM header symbols may be used for signaling purposes. By way of example, the modulation of the subcarriers may be used to transmit information about the subsequent payload data packet(s) (such as address information, modulation format etc.) or as an independent data channel, e.g. for network management information or low data rate user data.

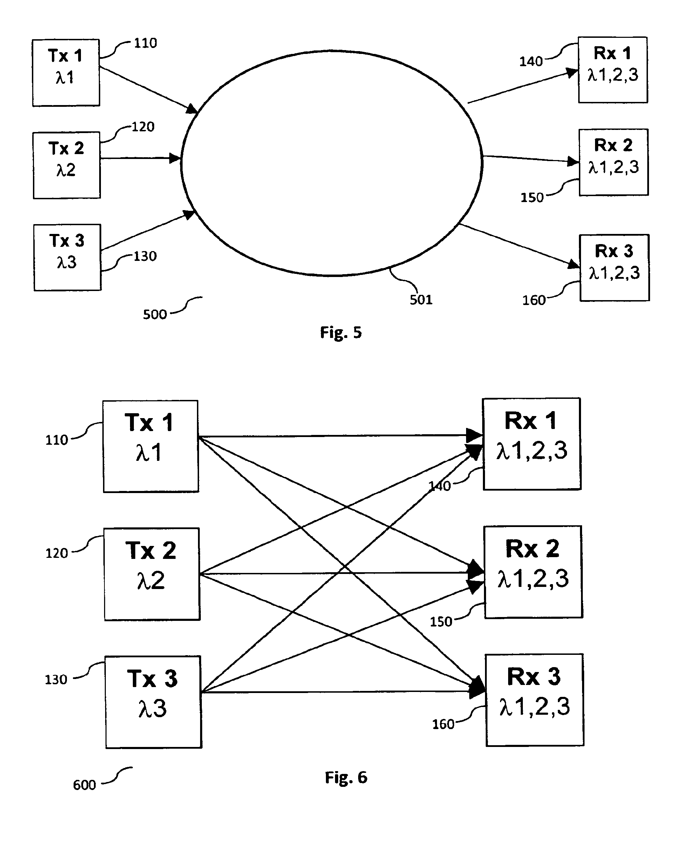

As outlined above, the proposed approach of OFDM header insertion may be applied to TDM systems 100 with unsynchronized transmitters 110, 120, 130 as shown in Fig. 1. With the aid of the OFDM header symbols, a receiver 140 is capable to adapt quickly to the data bursts 111, 121, 131 coming from different transmitters 110, 120, 130 with variations in symbol timing and/or wavelength and/or polarization. Furthermore, other topologies, like a fiber ring topology 500 comprising a fiber ring 500 (see Fig. 5) or fully meshed networks 600 (see Fig. 6) are applicable as well.

Another application for the proposed header insertion scheme is the slicing of a data stream as shown in Fig. 7. Different data packets comprising an OFDM header symbol 710, 720, 730 and payload data 711, 721, 731 are received. The detection of the OFDM headers 710, 720, 730 triggers the storage of the corresponding data bursts 711, 721, 731 in respective storages 712, 722, 732 in memory. For this purpose, the slicing scenario 700 comprises a header detection unit 740 and a slicing unit 750. Subsequent to slicing and storage, the data bursts 711, 721, 731 can be processed, e.g. for demodulation and forward error correction decoding.

By the introduction of an OFDM-based, data independent synchronization symbol, a burst mode capable coherent transmission system may be implemented. Experimental comparison of differently shaped 32-/64-QAM-constellations shows a benefit of up to 3dB in OSNR-sensitivity for round constellation patterns.

For the experimental setup, the I- and Q-component of pre-calculated QAM-modulated data burst signals are stored in the memory of an 10 GSa/s arbitrary waveform generator (AWG), which outputs drive a nested I/Q-modulator. Polarization diverse multiplexing may be emulated by splitting and recombining the signal with orthogonal polarization with a delay of 27 ns. At the receiver an independent second laser may be used as local oscillator (LO). The light of the received signal and LO is superimposed in a polarization diverse 90°-hybrid 401. The output signals of the four balanced photo detectors are digitized with a realtime sampling scope at 12.5 GSa/s and transferred to a PC for the receiver signal processing depicted in Fig. 4. The nominal resolution of AWG and sampling scope may be 8 bit. The symbol rate for the performance measurements may be 2.5 Gbaud/s, thus a data rate of 25 Gb/s for PDM-32QAM and 30 Gb/s for PDM-64QAM formats could be achieved.

The digital signal processing at the receiver is depicted Fig. 4. To allow a fast adaption of the receiver, every data burst is preceded by an OFDM synchronization symbol 210, 220 with a length of 27 ns. 88 out of 256 subcarriers are distributed on the two orthogonal polarizations. The subcarriers are used to detect the beginning of a data burst, to calculate the frequency offset of transmitter laser and LO and for channel estimation including the 2x2 matrix coefficients for polarization de-multiplexing of the data symbols.

In a second path, the single carrier PDM-QAM data symbols are processed. The necessary parameters for time synchronization, frequency conversion and polarization de-multiplexing are derived from the OFDM synchronization symbols in the units 413, 414, 415. The frequency offset and the orientation of polarization may typically be treated as constant during the data burst of 9216 symbols. However, the phase drift between transmitter and LO should be tracked and compensated. This may be achieved by a PID-control loop for the symbols phase, with a decision feed back on a symbol-by-symbol basis. To optimize the signal to noise ratio and suppress inter symbol interference before decision, an adaptive equalizer with 17 tap FIR filters 406 may be used on each data stream separately. A matched root raised cosine filter for pulse shaping may be included during up- and down sampling in the transmitter and receiver, respectively.

Due to the introduction of an independent OFDM synchronization symbol, the processing of the single carrier PDM-QAM data symbols at the receiver does not depend on a certain modulation constellation. This allows the use of differently shaped constellations without variation of the receiver algorithm. By way of example, rectangular QAM-constellations in cross and square shape, hexagonal shaped constellations, which allow for the most compact packing of constellation points within a given area, and/or round ring constellations, with low peak-to-average ratio and increased density of points in the middle of the constellation may be used for the payload data.

As such, a burst mode capable transmission system with an OFDM based, data independent synchronization symbol for a fast adaption of the receiver has been described. The implemented receiver algorithms allow the transmission of arbitrary shaped QAM constellations with up to 64 states in polarization division multiplex. By measurement of symbol error rate vs. OSNR, a square, hexagonal and round shaped types of constellation diagrams with 32 and 64 states have been compared. It can be shown that round constellation shapes show a benefit of up to 3 dB in the noise limited regime. For PDM-32 QAM round constellations allow error free transmission, if the system is limited by hardware constraints like resolution of the converters and phase noise. For 64-QAM the error floor of the system may significantly be reduced by the usage of non-square constellation shapes.

In the present document methods and systems for the fast synchronization of optical transmission systems are described. It is proposed to make use of OFDM training symbols in combination with additional payload data. The OFDM training symbols may be specifically designed to allow for a fast synchronization of a timing offset and a frequency offset. Alternatively or in addition, the OFDM training symbols are appropriately designed to allow for fast (e.g. quasi instantaneous) polarization de-multiplexing of polarization multiplexed optical signals. As such, the OFDM synchronization headers allow for the implementation of fast adapting receivers. Furthermore, additional information, like address labels, may be inserted into the OFDM headers. Consequently, quick adapting coherent optical receivers can be implemented which allow for new optical network concepts, e.g. network concepts based on burst mode transmission using spectral efficient PDM-QAM.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Furthermore, it should be noted that steps of various above-described methods and modules of described systems can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

In addition, it should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be  substantially represented in computer readable medium and so executed by a computer or processor, whether or not such computer or processor is explicitly shown.

**Claims**

1. A transmitter (110) of an optical polarization division multiplexed, PDM, signal; wherein the PDM signal comprises a first signal component (810) in a first optical polarization plane and a second signal component (820) in a second optical polarization plane; the transmitter (110) comprising

   - a symbol generation unit (801) adapted to generate a first OFDM symbol (210) having N samples at a sample duration and a second OFDM symbol (220) having N samples at the sample duration; wherein the first (210) and second (220) OFDM symbols comprise mutually exclusive sets of OFDM subcarriers; wherein the symbol generation unit (801) is further adapted to generate the first OFDM symbol (210) and the second OFDM symbol (220) having a pre-determined structure in the time domain; wherein the pre-determined structure in the time domain is [C, D, C*, D*], wherein C and D are subgroups of $N/4$ samples of the first (210) and/or second (220) OFDM symbol; wherein C* and D* are complex conjugates of C and D, respectively; and
   - a symbol insertion unit (802) adapted to adjoin the first OFDM symbol (210) to first payload data (211) for transmission in the first signal component (810), and adapted to adjoin the second OFDM symbol (220) to second payload data (221) for transmission in the second signal component (820).

2. The transmitter (110) of claim 1, wherein the first (210) and second (220) OFDM symbols comprise N OFDM subcarriers; wherein the mutually exclusive sets of OFDM subcarriers comprise a first set for the first OFDM symbol (210) and a second set for the second OFDM symbol (220); and  wherein an amplitude of the odd OFDM subcarriers is set to zero.

3. The transmitter (110) of claim 2, wherein the first set of OFDM subcarriers comprises the OFDM subcarriers $2+4*k$ and the second set of OFDM subcarriers comprises the OFDM subcarriers $4*k$, with $k=0,...,N/4-1.$

4. The transmitter (110) of any previous claims, wherein amplitudes and/or phase of the first and/or second set of OFDM subcarriers are any of:

   - pseudo-random sequences; and
   - MPSK modulated.

5. The transmitter (110) of any previous claims, wherein the first (210) and/or second (220) OFDM symbols carry signaling information and/or user data.

6. The transmitter (110) of any previous claims, wherein the symbol insertion unit (802) is adapted to periodically adjoin first (210) and/or second (220) OFDM symbols to the first and/or second payload data.

7. The transmitter (110) of any previous claim, wherein the first and/or second payload data comprises a pilot symbol and/or a pilot subcarrier for equalization at a corresponding receiver (400).

8. The transmitter (110) of any previous claim, wherein the first and/or second payload data are any of:

   - OFDM data; and
   - single carrier data.

9. A receiver (140) of an optical polarization division multiplexed, PDM, signal; wherein the PDM signal comprises a first signal component (810) in a first optical polarization plane and a second signal component (820) in a second optical polarization plane; wherein the first signal component comprises a first OFDM symbol (210) having $N$ samples at a sample duration adjoined to first  payload data (211); wherein the second signal component comprises a second OFDM symbol (220) having $N$ samples at the sample duration adjoined to second payload data (221); the receiver (140) comprising

- a channel estimation unit (415) adapted to determine coefficients of a polarization de-multiplexer (405) for isolating the first (810) and second (820) signal components from the PDM signal; wherein the coefficients are determined using the fact that, at a corresponding transmitter, the first (210) and second (220) OFDM symbols comprises mutually exclusive sets of OFDM subcarriers, and using the fact that, at the corresponding transmitter, the first OFDM symbol (210) and the second OFDM symbol (220) have a pre-determined structure in the time domain; wherein the pre-determined structure in the time domain is [C, D, C*, D*], wherein C and D are subgroups of $N/4$ samples of the first (210) and/or second (220) OFDM symbol; wherein C* and D* are complex conjugates of C and D, respectively.

10. The receiver (140) of claim 9, wherein the first (210) and/or second (220) OFDM symbols have a pre-determined structure in the time-domain, and wherein the receiver (140) comprises

   - a symbol detection unit (413) adapted to determine a time offset using the pre-determined structure of the first (210) and/or second (220) OFDM symbols; and
   - a timing synchronization unit (403) adapted to time-synchronize the reception of the first and/or second payload data using the time offset; and/or
   - a frequency offset determination unit (414) adapted to determine a frequency offset using the pre-determined structure of the first (210) and/or second (220) OFDM symbols; and
   - a frequency offset compensation unit (404) adapted to compensate a frequency offset of a signal carrier for the reception of the first and/or second payload data using the time offset.

11. The receiver (140) of any of claims 9 to 10, wherein the polarization de-multiplexer (405) comprises a 2x2- MIMO filter structure in time- or frequency domain, and wherein the channel estimation unit (415) is adapted to determine the filter coefficients as the coefficients of a two by two matrix which models a transformation of the first and second OFDM symbols at the transmitter into the first and second OFDM symbols at the receiver.

12. An optical polarization division multiplexed, PDM, signal comprising a first signal component (810) in a first optical polarization plane and a second signal component (820) in a second optical polarization plane; wherein the first signal component comprises a first OFDM symbol (210) having N samples at a sample duration adjoined to first payload data (211); wherein the second signal component comprises a second OFDM symbol (220) having N samples at the sample duration adjoined to second payload data (221); and wherein the first (210) and second (220) OFDM symbols comprise mutually exclusive sets of OFDM subcarriers, and wherein the first OFDM symbol (210) and the second OFDM symbol (220) have a pre-determined structure in the time domain; wherein the pre-determined structure in the time domain is [C, D, C*, D*], wherein C and D are subgroups of $N/4$ samples of the first (210) and/or second (220) OFDM symbol; wherein C* and D* are complex conjugates of C and D, respectively.

13. A method for enabling polarization de-multiplexing of an optical polarization division multiplexed, PDM, signal; the method comprising

   - generating a first OFDM symbol (210) having $N$ samples at a sample duration and a second OFDM symbol (220) having $N$ samples at the sample duration; wherein the first (210) and second (220) OFDM symbols comprise mutually exclusive sets of OFDM subcarriers; and wherein the first OFDM symbol (210) and the second OFDM symbol (220) have a pre-determined structure in the time domain; wherein the pre-determined structure in the time domain is [C, D, C*, D*], wherein C and D are subgroups of $N/4$ samples of the first (210) and/or second (220) OFDM symbol; wherein C* and D* are complex conjugates of C and D, respectively;
   - adding the first OFDM symbol (210) to first payload data (211) for transmission in a first signal component (810) of the PDM signal; and
   - adding the second OFDM symbol (220) to second payload data (221) for transmission in a second signal component (820) of the PDM signal.

14. A method for performing polarization de-multiplexing of an optical polarization division multiplexed, PDM, signal; wherein the PDM signal comprises a first signal component (810) in a first optical polarization plane and a second signal component (820) in a second optical polarization plane; wherein the first signal component comprises a first OFDM symbol (210) having N samples at a sample duration adjoined to first payload data (211); wherein the second signal component comprises a second OFDM symbol (220) having N samples at the sample duration adjoined to second payload data (221); the method comprising

   - determining coefficients of a polarization de-multiplexer (405) for isolating the first (810) and second (820) signal components from the PDM signal; wherein the coefficients are determined using the fact that, at a corresponding transmitter, the first (210) and second (220) OFDM symbols comprised mutually exclusive sets of OFDM subcarriers, and using the fact that, at the corresponding transmitter, the first OFDM symbol (210) and the second OFDM symbol (220) have a pre-determined structure in the time domain; wherein the pre-determined structure in the time domain is [C, D, C*, D*], wherein C and D are subgroups of $N/4$ samples of the first (210) and/or second (220) OFDM symbol; wherein C* and D* are complex conjugates of C and D, respectively.

## Patentansprüche

**1.** Sender (110) eines polarisationsgemultiplexten bzw. optischen PDM-Signals; wobei das PDM-Signal eine erste Signalkomponente (810) in einer ersten optischen Polarisationsebene und eine zweite Signalkomponente (820) in einer zweiten optischen Polarisationsebene umfasst; wobei der Sender (110) umfasst:

- Eine Symbolerzeugungseinheit (801), ausgelegt für das Erzeugen eines ersten OFDM-Symbols (210) mit $N$ Abtastwerten bei einer Abtastdauer und eines zweiten OFDM-Symbols (220) mit $N$ Abtastwerten bei der Abtastdauer; wobei das erste (210) und das zweite (220) OFDM-Symbol sich gegenseitig ausschließende Sätze von OFDM-Unterträgern umfassen; wobei die Symbolerzeugungseinheit (801) weiterhin für das Erzeugen des ersten OFDM-Symbols (210) und des zweiten OFDM-Symbols (220) mit einer vorbestimmten Struktur im Zeitbereich ausgelegt ist; wobei die vorbestimmte Struktur in dem Zeitbereich [C, D, C*, D*] ist; wobei C und D Untergruppen von $N/4$ Abtastwerten des ersten (210) und/oder des zweiten (220) OFDM-Symbols darstellen; wobei C* und D* jeweils Komplex-Konjugaten von C und D sind;
- eine Symboleinfügeeinheit (802), weiche dazu ausgelegt ist, das erste OFDM-Symbol (210) zu ersten Nutzdaten (211) für die Übertragung in der ersten Signalkomponente (810) hinzuzufügen, und dazu ausgelegt ist, das zweite OFDM-Symbol (220) zu zweiten Nutzdaten (221) für die Übertragung in der zweiten Signalkomponente (820) hinzuzufügen.

**2.** Sender (110) nach Anspruch 1, wobei das erste (210) und das zweite (220) OFDM-Symbol $N$ OFDM-Unterträger umfassen; wobei die sich gegenseitig ausschließenden Sätze von OFDM-Unterfrägern einen ersten Satz für das erste OFDM-Symbol (210) und einen zweiten Satz für das zweite OFDM-Symbol (220) umfassen; und wobei eine Amplitude der ungeradzahligen OFDM-Unterträger auf null gesetzt wird.

**3.** Sender (110) nach Anspruch 2, wobei der erste Satz von OFDM-Unterträgern die OFDM-Unterträger $2+4*k$ und der zweite Satz von OFDM-Unterträgern die OFDM-Unterträger $4*k$ umfassen, wobei $k=0,..., N/4-1$.

**4.** Sender (110) nach einem beliebigen der Ansprüche, wobei die Amplituden und/oder die Phase des ersten und/oder des zweiten Satzes von OFDM-Unterträgern entweder

- Pseudo-Zufallssequenzen; oder
- MPSK-moduliert

sind.

**5.** Sender (110) nach einem bellebigen der vorstehenden Ansprüche, wobei das erste (210) und/oder das zweite (220) OFDM-Symbol Signalisierungs- und/oder Benutzerdaten transportieren.

**6.** Sender (110) nach einem beliebigen der vorstehenden Ansprüche, wobei die Symboleinfügeeinheit (820) für das periodische Hinzufügen des ersten (210) und/oder des zweiten (220) OFDM-Symbols zu den ersten und/oder den zweiten Nutzdaten ausgelegt ist.

**7.** Sender (110) nach einem beliebigen der vorstehenden Ansprüche, wobei die ersten und/oder die zweiten Nutzdaten ein Pilotsymbol und/oder einen Pilotunterträger zur Entzerrung an einem entsprechenden Empfänger (400) umfassen.

**8.** Sender (110) nach einem beliebigen der vorstehenden Ansprüche, wobei die ersten und/oder die zweiten Nutzdaten entweder

- OFDM-Daten; oder
- Elnzelträgerdaten

sind.

**9.** Empfänger (140) eines optischen polarisationsgemultiplexten bzw. PDM-Signals; wobei das PDM-Signal eine erste Signalkomponente (810) In einer ersten optischen Polarisationsebene und eine zweite Signalkomponente (820) In einer zweiten optischen Polarisationsebene umfasst; wobei die erste Signalkomponente ein erstes OFDM-Symbol (210) mit $N$ Abtastwerten bei einer Abtastdauer, welches zu ersten Nutzdaten (211) hinzugefügt wird, umfasst; wobei die zweite Signalkomponente ein zweites OFDM-Symbol (220) mit $N$ Abtastwerten bei der Abtastdauer, weiches zu zweiten Nutzdaten (221) hinzugefügt wird, umfasst, wobei der Empfänger (140) umfasst:

- Eine Kanalschätzeinheit (415), weiche dazu ausgelegt ist, Koeffizienten eines Polarisations-Demultiplexers (405) zur Isollerung der ersten (810) und der zweiten (820) Signalkomponente von dem PDM-Signal zu ermittein; wobei die Koeffizienten unter Verwendung der Tatsache, dass, an einem entsprechenden Sender, das erste (210) und das zweite (220) OFDM-Symbol sich gegenseitig ausschließende Sätze von OFDM-Unterträgern umfassen, und unter Verwendung der Tatsache, dass, an dem entsprechenden Sender, das erste OFDM-Symbol (210) und das zweite OFDM-Symbol (220) eine vorbestimmte Struktur in dem Zeitbereich aufweisen, wobei die vorbestimmte Struktur in dem Zeitbereich [C, D, C*, D*] ist; wobei C und D Untergruppen von $N/4$ Abtastwerten des ersten (210) und/oder des zweiten (220) OFDM-Symbols darsteilen; wobei C* und D* jeweils Komplex-Konjugaten von C und D sind.

**10.** Empfänger (140) nach Anspruch 9, wobei das erste (210) und/oder das zweite (220) OFDM-Symbol eine vorbestimmte Struktur in dem Zeitbereich aufweisen, und wobei der Empfänger (140) umfasst:

- Eine Symbolerfassungseinheit (413), welche für das Ermitteln eines Zeitversatzes unter Verwendung der vorbestimmten Struktur des ersten (210) und/oder des zweiten (220) OFDM-Symbols ausgelegt ist; und
- eine Zeitsynchronisationseinheit (403), weiche für die zeitliche Synchronisation des Empfangs der ersten und/oder zweiten Nutzdaten unter Verwendung des Zeitversatzes ausgelegt ist; und/oder
- eine Frequenzversatzermittlungseinheit (414), weiche für das Ermitteln eines Frequenzversatzes unter Verwendung der vorbestimmten Struktur des ersten (210) und/oder des zweiten (220) OFDM-Symbols ausgelegt ist; und
- eine Frequenzversatzkompensationseinheit (404), weiche für das Kompensieren eines Frequenzversatzes eines Signalträgers für den Empfang der ersten und/oder der zweiten Nutzdaten unter Verwendung des Zeitversatzes ausgelegt Ist.

**11.** Empfänger (140) nach einem beliebigen der Ansprüche 9 bis 10, wobei der Polarisationsdemultiplexer (405) eine 2x2-MIMO-Filterstruktur im Zeit-oder Frequenzbereich umfasst, und wobei die Kanalschätzeinheit (415) dazu ausgelegt ist, die Filterkoeffizlenten als die Koeffizienten einer 2x2-Matrix, welche eine Transformation des ersten und des zweiten OFDM-Symbols am Sender in das erste und das zweite OFDM-Symbol am Empfänger modelliert, zu bestimmen.

**12.** Optisches polarisationsgemultiplextes bzw. PDM-Signal mit einer ersten Signalkomponente (810) in einer ersten optischen Polarisationsebene und einer zweiten Signalkomponente (820) in einer zweiten optischen Polarisationsebene, wobei die erste Signalkomponente ein erstes OFDM-Symbol (210) mit N Abtastwerten bei einer Abtastdauer, welches zu ersten Nutzdaten (211) hinzugefügt wird, umfasst; wobei die zweite Signalkomponente ein zweites OFDM-Symbol (220) mit N Abtastwerten bel der Abtastdauer, weiches zu zweiten Nutzdaten (221) hinzugefügt wird, umfasst, und wobei das erste (210) und das zweite (220) OFDM-Symbol sich gegenseitig ausschließende Sätze von OFDM-Unterträgern umfassen, und wobei das erste OFDM-Symbol (210) und das zweite OFDM-Symbols (220) eine vorbestimmte Struktur im Zeitbereich aufweise; wobei die vorbestimmte Struktur in dem Zeitbereich [C, D, C*, D*] ist; wobei C und D Untergruppen von $N/4$ Abtastwerten des ersten (210) und/oder des zweiten (220) OFDM-Symbols darstallen; wobei C* und D* jeweils Komplex-Konjugaten von C und D sind.

**13.** Verfahren zum Ermöglichen des Polarisationsdemultiplexens eines optischen polarisationsgemultiplexten bzw, PDM-Signals, wobei das Verfahren umfasst:

- Erzeugen eines ersten OFDM-Symbols (210) mit $N$ Abtastwerten bei einer Abtastdauer und eines zweiten OFDM-Symbols (220) mit $N$ Abtastwerten bei der Abtastdauer; wobei das erste (210) und das zweite (220) OFDM-Symbol sich gegenseitig ausschließende Sätze von OFDM-Unterträgern umfassen; wobei das erste OFDM-Symbol (210) und das zweite OFDM-Symbol (220) eine vorbestimmte Struktur im Zeitbereich aufweisen; wobei die vorbestimmte Struktur in dem Zeitbereich [C, D, C*, D*] ist; wobei C und D Untergruppen von $N/4$ Abtastwerten des ersten (210) und/oder des zweiten (220) OFDM-Symbols darstellen; wobei C* und D* jeweils Komplex-Konjugaten von C und D sind;

- Hinzufügen des ersten OFDM-Symbols (210) zu ersten Nutzdaten (211) für die Übertragung in einer ersten Signalkomponente (810) des PDM-Signals; und

- Hinzufügen des zweiten OFDM-Symbols (220) zu zweiten Nutzdaten (221) für die Übertragung in einer zweiten Signalkomponente (820) des PDM-Signals,

**14.** Verfahren zum Durchführen des Polarisationsdemultiplexens eines optischen polarisationsgemultiplexten bzw. PDM-Signals; wobei das PDM-Signal eine erste Signalkomponente (810) In einer ersten optischen Polarisationsebene und eine zweite Signalkomponente (820) In einer zweiten optischen Polarisationsebene umfasst; wobei die erste Signalkomponente ein erstes OFDM-Symbol (210) mit $N$ Abtastwerten bei einer Abtastdauer, welches zu ersten Nutzdaten (211) hinzugefügt wird, umfasst; wobei die zweite Signalkomponente ein zweites OFDM-Symbol (220) mit $N$ Abtastwerten bei der Abtastdauer, welches zu zweiten Nutzdaten (221) hinzugefügt wird, umfasst, wobei das Verfahren umfasst:

- Ermitteln von Koeffizienten eines Polarisations-Demultiplexers (405) zur Isolierung der ersten (810) und der zweiten (820) Signalkomponente von dam PDM-Signal; wobei die Koeffizienten unter Verwendung der Tatsache, dass, an einem entsprechenden Sender, das erste (210) und das zweite (220) OFDM-Symbol sich gegenseitig ausschließende Sätze von OFDM-Unterträgern umfassen, und unter Verwendung der Tatsache, dass, an dem entsprechenden Sender, das erste OFDM-Symbol (210) und das zweite OFDM-Symbol (220) eine vorbestimmte Struktur in dem Zeitbereich aufweisen; wobei die vorbestimmte Struktur in dem Zeitbereich [C, D, C*, D*] ist; wobei C und D Untergruppen von $N/4$ Abtastwerten des ersten (210) und/oder des zweiten (220) OFDM-Symbols daratellen; wobei C* und D* jeweils Komplex-Konjugaten von C und D sind.

## Revendications

**1.** Émetteur (110) d'un signal optique multiplexé par répartition en polarisation, PDM ; dans lequel le signal PDM comprend une première composante de signal (810) dans un premier plan de polarisation optique et une deuxième composante de signal (820) dans un deuxième plan de polarisation optique ; l'émetteur (110) comprenant

- une unité de génération de symboles (801) adaptée pour générer un premier symbole OFDM (210) présentant $N$ échantillons pendant une durée d'échantillon et un deuxième symbole OFDM (220) présentant $N$ échantillons pendant la durée d'échantillon ;

le premier (210) et le deuxième (220) symboles OFDM comprenant des ensembles mutuellement exclusifs de sous-porteuses OFDM ; l'unité de génération de symboles (801) étant en outre adaptée pour générer le premier symbole OFDM (210) et le deuxième symbole OFDM (220) présentant une structure prédéterminée dans le domaine temporel; la structure prédéterminée dans le domaine temporel étant [C, D, C*, D*], dans laquelle C et D sont des sous-groupes de $N/4$ échantillons du premier (210) et/ou du deuxième (220) symbole(s) OFDM ; dans laquelle C* et D* sont des conjugués complexes de C et D, respectivement ; et

- une unité d'insertion de symboles (802) adaptée pour associer le premier symbole OFDM (210) aux premières données de charge utile (211) pour la transmission dans la première composante de signal (810), et adaptée pour associer le deuxième symbole OFDM (220) aux deuxièmes données de charge utile (221) pour la transmission dans la deuxième composante de signal (820).

**2.** Émetteur (110) selon la revendication 1, dans lequel le premier (210) et le deuxième (220) symboles OFDM comprennent $N$ sous-porteuses OFDM ; les ensembles mutuellement exclusifs de sous-porteuses OFDM comprenant un premier ensemble pour le premier symbole OFDM (210) et un deuxième ensemble pour le deuxième symbole OFDM (220) ; et
une amplitude des sous-porteuses OFDM impaires étant réglée sur zéro.

**3.** Émetteur (110) selon la revendication 2, dans lequel le premier ensemble de sous-porteuses OFDM comprend les sous-porteuses OFDM $2+4*k$ et le deuxième ensemble de sous-porteuses OFDM comprend les sous-porteuses OFDM $4*k$, avec $k=0,...,N/4-1$.

**4.** Émetteur (110) selon l'une quelconque des revendications précédentes, dans lequel des amplitudes et/ou une phase des premier et/ou deuxième ensemble(s) de sous-porteuses OFDM sont l'une quelconque parmi:

- des séquences pseudo-aléatoires ; et
- une modulation MPSK,

**5.** Émetteur (110) selon l'une quelconque des revendications précédentes, dans lequel le premier (210) et/ou le deuxième (220) symbole(s) OFDM transporte(nt) des informations de signalisation et/ou des données utilisateur.

**6.** Émetteur (110) selon l'une quelconque des revendications précédentes, dans lequel l'unité d'insertion de symboles (802) est adaptée pour associer périodiquement le premier (210) et/ou le deuxième (220) symbole(s) OFDM aux premières et/ou deuxièmes données de charge utile.

**7.** Émetteur (110) selon l'une quelconque des revendications précédentes, dans lequel les premières et/ou deuxièmes données de charge utile comprennent un symbole pilote et/ou une sous-porteuse pilote pour l'égalisation au niveau d'un récepteur (400) correspondant.

**8.** Émetteur (110) selon l'une quelconque des revendications précédentes, dans lequel les premières et/ou deuxièmes données de charge utile sont des données quelconques parmi :

- des données OFDM ; et
- des données de porteuse unique.

**9.** Récepteur (140) d'un signal optique multiplexé par répartition en polarisation, PDM ; dans lequel le signal PDM comprend une première composante de signal (810) dans un premier plan de polarisation optique et une deuxième composante de signal (820) dans un deuxième plan de polarisation optique ; la première composante de signal comprenant un premier symbole OFDM (210) présentant *N* échantillons pendant une durée d'échantillon associé aux premières données de charge utile (211) ; la deuxième composante de signal comprenant un deuxième symbole OFDM (220) présentant *N* échantillons pendant la durée d'échantillon associé aux deuxièmes données de charge utile (221) ; le récepteur (140) comprenant

- une unité d'astimation de canal (415) adaptée pour déterminer des coefficients d'un démultiplexeur de polarisation (405) pour isoler les premières (810) et deuxièmes (820) composantes de signal du signal PDM ; les coefficients étant déterminés en utilisant le fait que, au niveau d'un émetteur correspondant, les premier (210) et deuxième (220) symboles OFDM comprennent des ensembles mutuellement exclusifs de sous-porteuses OFDM, et en utilisant le fait que, au niveau de l'émetteur correspondant, le premier symbole OFDM (210) et le deuxième symbole OFDM (220) présentent une structure prédéterminée dans le domaine temporel ; la structure prédéterminée dans le domaine temporel étant [C, D, C*, D*], dans laquelle C et D sont des sous-groupes de *N/4* échantillons du premier (210) et/ou du deuxième (220) symbole(s) OFDM ; dans laquelle C* et D* sont des conjugués complexes de C et D, respectivement.

**10.** Récepteur (140) selon la revendication 9, dans lequel le premier (210) et/ou le deuxième (220) symbole(s) OFDM présente(nt) une structure prédéterminée dans le domaine temporel, le récepteur (140) comprenant

- une unité de détection de symbole (413) adaptée pour déterminer un décalage temporel en utilisant la structure prédéterminée du premier (210) et/ou du deuxième (220) symbole(s) OFDM ; et
- une unité de synchronisation temporelle (403) adaptée pour synchroniser dans le temps la réception des premières et/ou des deuxièmes données de charge utile en utilisant le décalage temporel ; et/ou
- une unité de détermination de décalage de fréquence (414) adaptée pour déterminer un décalage de fréquence en utilisant la structure prédéterminée du premier (210) et/ou du deuxième (220) symbole(s) OFDM ; et
- une unité de compensation de décalage de fréquence (404) adaptée pour compenser un décalage de fréquence d'une porteuse de signal pour la réception des premières et/ou deuxièmes données de charge utile en utilisant le décalage temporel.

**11.** Récepteur (140) selon l'une quelconque des revendications 9 et 10, dans lequel le démultiplexeur de polarisation (405) comprend une structure de filtre 2x2 MIMO dans un domaine temporel ou de fréquences, et dans lequel l'unité d'estimation de canal (415) est adaptée pour déterminer les coefficients de filtre en tant que coefficients d'une matrice deux par deux qui modélise une transformation des premier et deuxième symboles OFDM au niveau de l'émetteur dans les premier et deuxième symboles OFDM au niveau du récepteur.

12. Signal optique multiplexé par répartition en polarisation, PDM, comprenant une première composante de signal (810) dans un premier plan de polarisation optique et une deuxième composante de signal (820) dans un deuxième plan de polarisation optique ; la première composante de signal comprenant un premier symbole OFDM (210) présentant *N* échantillons pendant une durée d'échantillon associé aux premières données de charge utile (211) ; la deuxième composante de signal comprenant un deuxième symbole OFDM (220) présentant *N* échantillons pendant la durée d'échantillon associé aux deuxièmes données de charge utile (221) ; et les premier (210) et deuxième (220) symboles OFDM comprenant des ensembles mutuellement exclusifs de sous-porteuses OFDM, et le premier symbole OFDM (210) et le deuxième symbole OFDM (220) présentant une structure prédéterminée dans le domaine temporel ; la structure prédéterminée dans le domaine temporel étant [C, D, C*, D*], dans laquelle C et D sont des sous-groupes de *N/4* échantillons du premier (210) et/ou du deuxième (220) symbole(s) OFDM ; dans laquelle C* et D* sont des conjugués complexes de C et D, respectivement.

13. Procédé permettant le démultiplexage de polarisation d'un signal optique multiplexé par répartition en polarisation, PDM ; le procédé comprenant les étapes suivantes

- générer un premier symbole OFDM (210) présentant *N* échantillons pendant une durée d'échantillon et un deuxième symbole OFDM (220) présentant *N* échantillons pendant la durée d'échantillon ; le premier (210) et le deuxième (220) symboles OFDM comprenant des ensembles mutuellement exclusifs de sous-porteuses OFDM ; le premier symbole OFDM (210) et le deuxième symbole OFDM (220) présentant une structure prédéterminée dans le domaine temporel ; la structure prédéterminée dans le domaine temporel étant [C, D, C*, D*], dans laquelle C et D sont des sous-groupes de *N/4* échantillons du premier (210) et/ou du deuxième (220) symbole(s) OFDM ; dans laquelle C* et D* sont des conjugués complexes de C et D, respectivement;
- ajouter le premier symbole OFDM (210) aux premières données de charge utile (211) pour la transmission dans une première composante de signal (810) du signal PDM ; et
- ajouter le deuxième symbole OFDM (220) aux deuxièmes données de charge utile (221) pour la transmission dans une deuxième composante de signal (820) du signal PDM.

14. Procédé pour réaliser le démultiplexage de polarisation d'un signal optique multiplexé par répartition en polarisation, PDM ; le signal PDM comprenant une première composante de signal (810) dans un premier plan de polarisation optique et une deuxième composante de signal (820) dans un deuxième plan de polarisation optique ; la première composante de signal comprenant un premier symbole OFDM (210) présentant *N* échantillons pendant une durée d'échantillon associé aux premières données de charge utile (211) ; la deuxième composante de signal comprenant un deuxième symbole OFDM (220) présentant *N* échantillons pendant la durée d'échantillon associé aux deuxièmes données de charge utile (221) ; le procédé comprenant l'étape suivante

- déterminer des coefficients d'un démultiplexeur de polarisation (405) pour isoler les premières (810) et deuxièmes (820) composantes de signal du signal PDM ; les coefficients étant déterminés en utilisant le fait que, au niveau d'un émetteur correspondant, les premier (210) et deuxième (220) symboles OFDM comprenaient des ensembles mutuellement exclusifs de sous-porteuses OFDM, et en utilisant le fait que, au niveau de l'émetteur correspondant, le premier symbole OFDM (210) et le deuxième symbole OFDM (220) présentent une structure prédéterminée dans le domaine temporel ; la structure prédéterminée dans le domaine temporel étant [C, D, C*, D*], dans laquelle C et D sont des sous-groupes de *N/4* échantillons du premier (210) et/ou du deuxième (220) symbole(s) OFDM ; dans laquelle C* et D* sont des conjugués complexes de C et D, respectivement.

**Fig. 1**

**Fig. 2**

$T_{SA}$: Sample duration
$C^*$, $D^*$: conjugate
complex of C, D

**Fig. 3**

EP 2 568 636 B1

401

402

413

414

415

Signal

LO

90°-Hybrid Optical front end AD-conversion

Signal restoration $R=(r_x, r_y)$

Symbol detection

Frequency offset

Channel estimation

$H = \begin{pmatrix} h_{11} & h_{12} \\ h_{21} & h_{22} \end{pmatrix}$

OFDM header processing

$t_0$

$f_0$

Sync

$f_0$

$\times$

$\times$

$h_{11}$ $h_{21}$ $h_{12}$ $h_{22}$

EQ

EQ

Data₁

Data₂

single-carrier PDM-QAM processing

406

407

Timing

Frequency offset

Pol. demux & static EQ

Phase tracking & adap EQ

Decision

403

404

405

400

**Fig. 4**

**Fig. 5**

**Fig. 6**

Header detection ⟋ 740

710   711      720   721      730   731

Memory

712 ⟋

| Sync | data 1 | | Sync | data 2 | | Sync | data 3 |

data 1

data 2

722 ⟋

data 3

700 ⟋

750 ⟋

732 ⟋

**Fig. 7**

801

800 ⟋

802

810

803 ⟋

804 ⟋

820

**Fig. 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 20110096855 A

**Non-patent literature cited in the description**

• **PARK.** A Novel Timing Estimation Method for OFDM Systems. *IEEE Comm. Letters,* May 2003, vol. 7, 239-241

• **SCHMIDL, COX.** Robust frequency and timing synchronization for OFDM. *IEEE Trans. Commun.,* December 1997, vol. 45, 1613-1621